# EUROPEAN PATENT SPECIFICATION

(11) **EP 3 466 525 B1**
(45) Date of publication and mention of the grant of the patent: **13.12.2023**
(21) Application number: 17802840.3
(22) Date of filing: 24.05.2017
(51) Int. Cl.: B01D 61/36, B01D 63/06, B01D 69/10, B01D 69/12, B01D 71/02

(54) **DEHYDRATION SYSTEM FOR AQUEOUS ORGANIC COMPOUNDS, OPERATION METHOD THEREFOR, AND DEHYDRATION METHOD**
ENTWÄSSERUNGSSYSTEM FÜR WÄSSRIGE ORGANISCHE VERBINDUNGEN, BETRIEBSVERFAHREN DAFÜR UND ENTWÄSSERUNGSVERFAHREN
SYSTÈME DE DÉSHYDRATATION POUR COMPOSÉS ORGANIQUES AQUEUX, SON PROCÉDÉ DE FONCTIONNEMENT ET PROCÉDÉ DE DÉSHYDRATATION

(30) Priority: 27.05.2016 JP 2016106415; 01.09.2016 JP 2016170944
(43) Date of publication of application: 10.04.2019
(73) Proprietor: Mitsubishi Chemical Corporation, Tokyo 100-8251 (JP)
(72) Inventor: KYOTANI, Tomohiro, Tokyo 100-8251 (JP)
(74) Representative: Ter Meer Steinmeister & Partner
(86) International application number: PCT/JP2017/019393
(87) International publication number: WO 2017/204254

(56) References cited:
- JP-A- H0 557 151
- JP-A- S5 573 301
- JP-A- S58 180 204
- JP-A- 2014 092 058
- JP-A- 2015 182 070
- JP-A- 2016 027 938
- JP-U- H0 731 130
- JP-U- S6 191 302
- US-A- 4 925 562
- US-A1- 2014 142 363
- US-B2- 7 951 738
- US-B2- 8 926 731

## Description

### TECHNICAL FIELD

The present invention relates to: a dehydration system including a separation membrane module, which is used for separating water from organic solvents in the industrial fields; an operation method of the same; and a dehydration method.

### BACKGROUND ART

Separation of water and an organic compound that are contained in an aqueous organic compound is an important technology for purification of aqueous organic compounds in chemical plants as well as recovery of organic compounds from aqueous organic compounds, for example, at precision electronic component factories and lithium battery production plants in the semiconductor industries of printed wiring boards, semiconductor wafers, electronic components, liquid crystal substrates, lenses and the like. Distillation has been conventionally employed as a method of dehydrating an aqueous organic compound; however, in recent years, dehydration methods using an inorganic membrane such as a zeolite membrane have been proposed (Patent Documents 1 to 4). US 2014/142363 A1 is directed to an improved lifetime membrane system for separating a gasoline feed stream using a ceramic pervaporation membrane.

In dehydration methods using a zeolite membrane as a separation membrane, there are a pervaporation method in which an aqueous organic compound is brought into contact with one side (e.g., outer side) of a membrane element and the pressure on the other side (e.g., inner side) is reduced so as to allow water to permeate through the membrane element in the form of steam, and a vapor permeation method in which an aqueous organic compound is supplied in a vapor state from the beginning. In both of these methods, the driving force of water permeation is determined by a difference in water partial pressure between the outer side (the side to which an aqueous organic compound is supplied) and the inner side (the side to which water permeates) of a membrane element.

As an apparatus for performing dehydration of an aqueous organic compound using a zeolite membrane, a dehydration system in which a separation membrane module is used may be employed. A tubular membrane element used in this separation membrane module is composed of a tubular porous ceramic support and a zeolite membrane disposed on the support.

One example of problems in aqueous organic compound dehydration systems using a separation membrane module equipped with a zeolite membrane as a separation membrane is damage to a membrane element (e.g., Non-patent Document 1). Damage to a membrane element markedly reduces the membrane water selectivity, consequently interfering with the plant operations. Therefore, a countermeasure for suppressing damage to a membrane element is demanded in such dehydration systems.

### RELATED ART DOCUMENTS

### PATENT DOCUMENTS

Patent Document 1: Japanese Unexamined Patent Application Publication No. 2003-144871
Patent Document 2: Japanese Unexamined Patent Application Publication No. 2006-263574
Patent Document 3: Japanese Unexamined Patent Application Publication No. 2011-121045
Patent Document 4: Japanese Unexamined Patent Application Publication No. 2012-81463

### NON-PATENT DOCUMENT

Non-patent Document 1: Third Technical/Research Workshop on Application of Membrane Separation to Chemical Processes "Aiming at Technology for Applying Membrane Separation to Chemical Processes: Development of High-Performance Separation Membranes and Forefront of Reaction Membrane Separation", held by Chugoku Economic Federation, etc.; lecture material ("Trouble Cases in Practical Application of Zeolite Membrane"), September 5, 2014

### SUMMARY OF THE INVENTION

### PROBLEMS TO BE SOLVED BY THE INVENTION

In order to solve the above-described problem of damage to a membrane element in dehydration systems using a separation membrane module, generally, the strength of the membrane element is increased as a countermeasure (Non-patent Document 1). Meanwhile, there can be found no case where the cause of damage to a membrane element was investigated in terms of device design or operation method of a dehydration system, particularly defects in a pipe for water vapor permeating through a membrane element or in a condensed water extraction sequence.

Under such circumstances, an object of the present invention is to provide: a dehydration system including a zeolite membrane-equipped separation membrane module used for separating water from an aqueous organic compound, in which damage to a membrane element in the separation membrane module can be reduced; and an operation method of the same.

### MEANS FOR SOLVING THE PROBLEMS

The present inventor intensively studied to solve the above-described problem and consequently discovered that damage to a membrane element in a dehydration system including a zeolite membrane-equipped separation membrane module is caused by backflow of condensed water, which is generated by condensation of water vapor permeating through the membrane element in a vacuum pipe, into the membrane element. In addition, the present inventor discovered that the cause of the backflow resides in a pipe connecting the membrane element and a condenser or in a defect of the vacuum pipe and/or condensed water extraction sequence, thereby completing the present invention.

For example, in the operation of a dehydration system including a zeolite membrane-equipped separation membrane module in a chemical plant, the dehydration system is generally assumed to be automatically and continuously operated outdoors regardless of the season and the time of day. In such a case, particularly in winter nights and the like, water vapor permeating through a membrane element is in a state where it is easily condensed in a vacuum pipe. The present invention provides a countermeasure against such condensed water.

That is, embodiments of the present invention include the followings.
[1] A dehydration system for separating water from an aqueous organic compound, the dehydration system including:
   a separation membrane module inside of which one or plural tubular membrane elements, each including a tubular porous ceramic support and a zeolite membrane disposed on the support, are arranged and which separates water from the aqueous organic compound supplied thereto using the one or plural tubular membrane elements;
   a pressure-reducing means for reducing the pressure on a water permeate side of each tubular membrane element; and
   a condenser which is arranged between the separation membrane module and the pressure-reducing means via a pipe and condenses water vapor permeating through the tubular membrane element (s) into water,
   wherein the dehydration system has at least one of the following configurations (1) and (2):
      Configuration (1): the dehydration system includes a temperature-maintaining means for maintaining the pipe connecting the separation membrane module and the condenser to have a temperature at which water does not condense, and
      Configuration (2): the pipe connecting the separation membrane module and the condenser is arranged downward from a permeated water outlet of the separation membrane module toward the condenser.
[2] The dehydration system according to [1], wherein the dehydration system has at least the configuration (1) and includes, as the temperature-maintaining means, an insulating member which covers the pipe connecting the separation membrane module and the condenser.
[3] The dehydration system according to [1] or [2], wherein the dehydration system has at least the configuration (1) and includes, as the temperature-maintaining means, a heating means for heating the pipe connecting the separation membrane module and the condenser.
[4] The dehydration system according to [3], wherein the heating means is a steam trace.
[5] The dehydration system according to any one of [1] to [4], having both of the configurations (1) and (2).
[6] A method of operating the dehydration system according to any one of [1] to [5], the method including maintaining the temperature of the pipe connecting the separation membrane module and the condenser to be 20°C or higher.
[7] The method according to [6], wherein the temperature of the pipe is adjusted to be in a range of -20°C to 20°C with respect to a preset temperature of the separation membrane module.

In the dehydration system including the separation membrane module, when the pressure in the pipe connecting the separation membrane module and the condenser is higher than a specific pressure, the membrane element (s) is/are likely to be damaged. In the present invention, damage of the membrane element(s) can be inhibited by controlling the above-described pressure to be not higher than a specific pressure.

That is, embodiments of the present invention also include the followings.
[8] A method of operating a dehydration system for separating water from an aqueous organic compound, wherein
   the dehydration system includes:
   a separation membrane module inside of which one or plural tubular membrane elements, each including a tubular porous ceramic support and a zeolite membrane disposed on the support, are arranged and which separates water from the aqueous organic compound supplied thereto using the one or plural tubular membrane elements;
   a pressure-reducing means for reducing the pressure on a water permeate side of each tubular membrane element;
   a condenser which is arranged between the separation membrane module and the pressure-reducing means via a pipe and condenses water vapor permeating through the tubular membrane element (s) into water; and
   a water storage vessel in which water permeating through the condenser is retained, and
   the method includes controlling the pressure in the pipe connecting the separation membrane module and the condenser to be an absolute pressure of 20 kPa or less when water retained in the water storage vessel is discharged.
[9] The method according to [8], wherein
   the dehydration system includes a pressure control member which is arranged on a pipe connecting the condenser and the water storage vessel and can be opened and closed, and
   the pressure in the pipe connecting the separation membrane module and the condenser is controlled by initially closing the pressure control member when water is discharged from the water storage vessel.
[10] The method according to [8] or [9], wherein, after water is discharged from the water storage vessel, the pressure control member arranged on the pipe connecting the condenser and the water storage vessel is opened in the end at the time of reducing the pressure in the water storage vessel and the pipe connecting the pressure control member and the water storage vessel.
   Embodiments of the present invention further include the followings.
[11] An aqueous organic compound dehydration method of separating water from an aqueous organic compound, the method including:
   a separation membrane module inside of which one or plural tubular membrane elements, each including a tubular porous ceramic support and a zeolite membrane disposed on the support, are arranged and which separates water from the aqueous organic compound supplied thereto using the one or plural tubular membrane elements;
   a pressure-reducing means for reducing the pressure on a water permeate side of each tubular membrane element;
   a condenser which is arranged between the separation membrane module and the pressure-reducing means via a pipe and condenses water vapor permeating through the tubular membrane element (s) into water; and
   a backflow-inhibiting means for inhibiting backflow of the thus condensed water into the membrane element(s).
[12] The aqueous organic compound dehydration method according to [11], wherein the backflow-inhibiting means has at least one of the following configurations (1) and (2):
   Configuration (1): the backflow-inhibiting means includes a temperature-maintaining means for maintaining the pipe connecting the separation membrane module and the condenser to have a temperature at which water does not condense, and
   Configuration (2): the pipe connecting the separation membrane module and the condenser is arranged downward from a permeated water outlet of the separation membrane module toward the condenser.
[13] The aqueous organic compound dehydration method according to [11], wherein
   the method includes a water storage vessel in which water permeated through the condenser is retained, and
   the backflow-inhibiting means controls the pressure in the pipe connecting the separation membrane module and the condenser to be an absolute pressure of 20 kPa or less when water retained in the water storage vessel is discharged.

### EFFECTS OF THE INVENTION

According to the present invention, a dehydration system that can be stably operated for a long period and a dehydration method, in which the occurrence of damage to a membrane element caused by condensed water generated in a pipe connecting a separation membrane module and a condenser is suppressed, as well as a method of stably operating the dehydration system for a long period, are provided.

### BRIEF DESCRIPTION OF THE DRAWINGS

[FIG. 1] FIG. 1 is a schematic view illustrating a dehydration system used for a pervaporation method (PV method), which is one embodiment of the dehydration system of the present invention.
[FIG. 2] FIG. 2 is a schematic view illustrating a dehydration system used for a pervaporation method (PV method), which is another embodiment of the dehydration system of the present invention.
[FIG. 3] FIG. 3 is an enlarged schematic view illustrating a section between a separation membrane module and a pressure-reducing means in the dehydration system according to one embodiment of the operation method of the present invention.
[FIG. 4] FIG. 4 is a schematic view for describing one example of a membrane element.

### MODE FOR CARRYING OUT THE INVENTION

The present invention will now be described in detail by way of examples and the like thereof; however, the present invention is not restricted to the below-described examples and the like, and modifications can be arbitrarily made within a range that does not depart form the gist of the present invention. It is noted here that, in the present specification, those numerical ranges stated with "to" each represent the values or physical amounts that are stated before and after "to".

One embodiment of the present invention is a dehydration system for separating water from an aqueous organic compound, the dehydration system including: a separation membrane module inside of which one or plural tubular membrane elements, each including a tubular porous ceramic support and a zeolite membrane disposed on the support, are arranged and which separates water from the aqueous organic compound supplied thereto using the one or plural tubular membrane elements; a pressure-reducing means for reducing the pressure on a water permeate side of each tubular membrane element; and a condenser which is arranged between the separation membrane module and the pressure-reducing means via a pipe and condenses water vapor permeating through the tubular membrane element (s) into water, wherein the dehydration system has at least one of the following configurations (1) and (2).

Configuration (1): the dehydration system includes a temperature-maintaining means for maintaining the pipe connecting the separation membrane module and the condenser to have a temperature at which water does not condense.

Configuration (2): the pipe connecting the separation membrane module and the condenser is arranged downward from a permeated water outlet of the separation membrane module toward the condenser.

It is noted here that the "pipe connecting the separation membrane module and the condenser" may be hereinafter referred to as a "transmission pipe".

The dehydration system of this embodiment is characterized by having at least one of the configurations (1) and (2). Examples of technical ideas common to the configurations (1) and (2) include inhibition of generation of condensed water in the pipe (transmission pipe) connecting the separation membrane module and the condenser of the dehydration system, and inhibition of backflow of condensed water generated in the transmission pipe into the separation membrane module.

By inhibiting generation and backflow of condensed water in the transmission pipe, the occurrence of damage to a membrane element can be suppressed. In the present specification, the term "damage to a membrane element" means a state where a defect such as cracking or breakage occurs in either or both of the tubular porous ceramic support and the zeolite membrane that constitute a membrane element and the water permeation selectivity of the membrane element is thereby reduced.

The configurations (1) and (2) can each contribute to the inhibition of generation and backflow of condensed water in the transmission pipe and, particularly, by adopting the configuration (1), the pipe can be maintained at the saturated water vapor temperature or higher, so that generation of condensed water particularly in the transmission pipe can be inhibited.

Further, by adopting the configuration (2), even when condensed water is generated, since it flows downward, backflow of condensed water into the separation membrane module can be inhibited especially when condensed water is generated. It is noted here that the phrase "arranged downward from a permeated water outlet of the separation membrane module toward the condenser" means any state where the condenser is positioned lower than the permeated water outlet of the separation membrane module and the transmission pipe is connected such that it is not positioned higher than the permeated water outlet of the separation membrane module; however, for avoidance of backflow, it is preferred that at least a part of the transmission pipe that is immediate to the permeated water outlet of the separation membrane module be arranged as vertical as possible.

In the dehydration system of this embodiment, the thickness (inner diameter) of the transmission pipe may be selected as appropriate taking into consideration, for example, the length of the pipe, the aqueous organic compound to be treated (e.g., the type, the water content, the treatment amount and the like), other equipments in the dehydration system (e.g., the condenser, the pressure-reducing means and the like), and the presence or absence of other dehydration equipment; however, since condensed water is likely to be generated when the thickness (inner diameter) of the transmission pipe is small, the thickness (inner diameter) of the transmission pipe is preferably not less than 2 cm, more preferably not less than 2.5 cm.

In one preferred mode, the dehydration system of this embodiment has at least the configuration (1) and includes, as the above-described temperature-maintaining means, an insulating member which covers the pipe connecting the separation membrane module and the condenser.

Further, in another preferred mode, the dehydration system of this embodiment has at least the configuration (1) and includes, as the above-described temperature-maintaining means, a heating means for heating the pipe connecting the separation membrane module and the condenser. In a more preferred mode, the dehydration system of this embodiment includes both the insulating member and the heating means as the temperature-maintaining means.

A heating method is not particularly restricted and, for example, a steam trace (steam pipe) or a heating wire of a heat transfer heater (electrical trace) may be wound around the transmission pipe. As the heating means, it is preferred to wound a steam trace on the transmission pipe since this makes it easy to obtain a heat source in a chemical plant or the like and to control the temperature.

From the standpoint of better suppressing the problems caused by condensed water in the transmission pipe, it is more preferred that the dehydration system of this embodiment have both of the configurations (1) and (2).

The method of operating the dehydration system of this embodiment is a method of operating the above-described dehydration system, which method includes maintaining the temperature of the pipe (transmission pipe) connecting the separation membrane module and the condenser to be 20°C or higher. By maintaining the temperature of the pipe to be 20°C or higher, generation of condensed water in the pipe can be avoided. From the standpoint of more reliably avoiding generation of condensed water, the temperature of the transmission pipe is preferably 40°C or higher, more preferably 60°C or higher, still more preferably 80°C or higher, yet still more preferably 100°C or higher, particularly preferably 110°C or higher, most preferably 120°C or higher.

More suitably, it is preferred to adjust the temperature of the pipe (transmission pipe) to be in a range of -20°C to 20°C with respect to a preset temperature of the separation membrane module.

The dehydration system of this embodiment can be utilized as an alternative means to a conventional dehydration equipment such as a distillation column, or as a means for post-processing of other dehydration equipment such as a distillation column. For example, an aqueous organic compound recovered from a distillation column arranged for a process preceding the separation membrane module may be supplied to the dehydration system. In this case, the conditions for operating the distillation column and the dehydration system of the present invention may be determined as appropriate taking into consideration the type, the water content and the like of the aqueous organic compound to be treated.

The aqueous organic compound to be dehydrated and concentrated by the dehydration system of this embodiment is not particularly restricted, and examples thereof include aqueous organic compounds such as aqueous organic acids, aqueous alcohols, and aqueous organic solvents. More specific examples of the aqueous organic compound include aqueous organic acids, such as citric acid, succinic acid, ethylenediamine tetraacetic acid, tartaric acid, salicylic acid, oxalic acid, acetic acid, formic acid, propionic acid, butyric acid, valeric acid, caproic acid, enanthic acid, caprylic acid, benzoic acid, acrylic acid, adipic acid, malonic acid, malic acid, phthalic acid, glycolic acid, terephthalic acid and fumaric acid; phenols; alcohols, such as methyl alcohol, ethyl alcohol, propyl alcohol, isopropyl alcohol, butyl alcohol, isobutyl alcohol, s-butyl alcohol and t-butyl alcohol; ketones, such as acetone and methyl isobutyl ketone; aldehydes; ethers, such as dioxane and tetrahydrofuran; nitrogen-containing organic compounds such as amides (e.g., dimethylformamide and *N*-methylpyrrolidone) ; esters, such as acetic acid esters; and organic solvents, such as hexane and toluene.

The water content in the aqueous organic compound to be treated is not particularly restricted, and the dehydration system of this embodiment can be applied to, for example, an aqueous organic compound having a water content of 5% by weight or higher.

The dehydration system of this embodiment and the operation method thereof will now be described referring to the drawings. Methods of dehydrating and concentrating an aqueous organic compound are broadly classified into pervaporation method (PV method) and vapor permeation method (VP method) and, in the following descriptions of the embodiments, a dehydration system based on a pervaporation method (PV method) performed for an aqueous organic compound supplied from a distillation column and an operation method thereof are exemplified; however, the present invention is not restricted thereto.

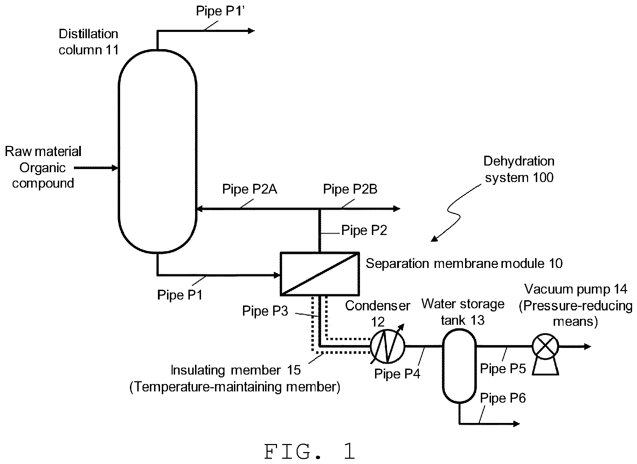

FIG. 1 is a schematic view illustrating a dehydration system based on a PV method, which is one example of the aqueous organic compound dehydration system of this embodiment.

In a dehydration system 100 of this embodiment illustrated in FIG. 1, a raw material organic compound as a raw material is distilled in a distillation column 11, and a low-boiling-point component is discharged from the top of the column via a pipe P₁', while a high-boiling-point component (liquid component) is supplied from the bottom of the column to a separation membrane module 10 via a pipe P₁. In the embodiment illustrated in FIG. 1, an aqueous organic compound constituting this high-boiling-point component is exemplified as a treatment subject; however, an aqueous organic compound constituting a liquid component obtained after condensation of the low-boiling-point component discharged via the pipe P₁' may be the treatment subject as well.

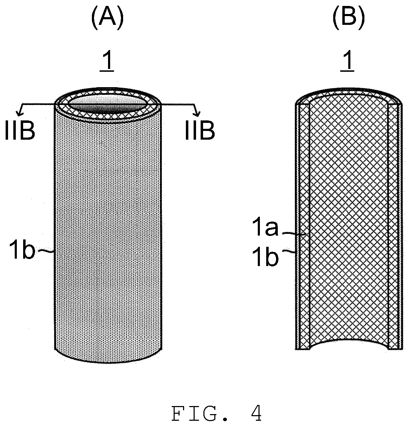

Inside the separation membrane module 10, one or plural tubular membrane elements (see FIG. 4), each having a tubular porous ceramic support and a zeolite membrane disposed on the support, are arranged. Each tubular membrane element has a separation membrane (zeolite membrane) which does not allow an organic compound to permeate therethrough but selectively allows water to permeate therethrough.

In the separation membrane module 10, an aqueous organic compound is brought into contact with the outer surface of each tubular membrane element and the pressure on the inner surface side is reduced by a pressure-reducing means to allow water to permeate from the outer surface to the inner surface of the membrane element, whereby the organic compound is concentrated and water is recovered. Further, in the PV method, since progress of such dehydration of the aqueous organic compound to be treated usually causes a reduction in temperature, a heating means (not illustrated) is arranged in the separation membrane module 10.

In the separation membrane module, the membrane element may be of a single-tube type or a multi-tube type, and it is preferred that usually 1 to 2,000, particularly 50 to 1,000 membrane elements be arranged apart from one another by a distance of 5 mm to 10 mm. In the separation membrane module, the housing size and the number of the membrane elements are changed as appropriate in accordance with the amount of a fluid to be treated. A concrete configuration of the membrane elements is described below.

The aqueous organic compound thus dehydrated and concentrated without permeating through the membrane element(s) is discharged via a pipe P₂ and then circulated back to the distillation column 11 via a pipe P_{2A} during a period when the water content is equal to or higher than a reference value, or recovered as a dehydrated organic compound via a pipe P_{2B} when the water content is equal to or lower than the reference value.

In the downstream of the separation membrane module 10, a condenser 12, a water storage tank 13 and a vacuum pump 14 are arranged in series, and water (steam) permeated through the separation membrane(s) in the membrane element(s) is condensed by the condenser 12 and subsequently sent to and retained in the water storage tank 13. The retained water is discharged from the bottom of the water storage tank 13 once the amount of the retained water reaches a prescribed level. A reduction in pressure on the permeate side that is required as a driving force of water permeating through the membrane(s) is attained by the vacuum pump 14 used as a pressure-reducing means, and the degree of vacuum is controlled by a pressure control valve (not illustrated) arranged in the middle of the pipe.

In this embodiment, a pipe P₃ (transmission pipe) connecting the separation membrane module 10 and the condenser 12 is covered by an insulating member 15 as a temperature-maintaining means, and a steam trace is wound as a heating means on the outer wall of the pipe P₃, although this is not illustrated in the drawing.

The insulating member 15 and the steam trace are temperature-maintaining means for inhibiting generation of condensed water caused by condensation of water vapor discharged from the separation membrane module 10 in the pipe P₃. That is, it is satisfactory as long as the pipe P₃ (transmission pipe) can be maintained to have a temperature at which generation of condensed water can be inhibited. More specifically, it is preferred to maintain the temperature of the pipe P₃ (transmission pipe) at 20°C or higher and, from the standpoint of more reliably avoiding generation of condensed water, the temperature of the transmission pipe is preferably 40°C or higher, more preferably 60°C or higher, still more preferably 80°C or higher, yet still more preferably 100°C or higher, particularly preferably 110°C or higher, most preferably 120°C or higher.

The temperature of the pipe P₃ (transmission pipe) is preferably adjusted to be in a range of -20°C to 20°C with respect to a preset temperature of the separation membrane module 10.

Further, during the operation of the separation membrane module 10, the pipe P₃ (transmission pipe) is preferably heated continuously; however, even if the heating of the pipe P₃ (transmission pipe) is temporarily discontinued for some reason, the temperature can be maintained by the insulating member 15.

The insulating member 15 is composed of, for example, a common heat-insulating material such as glass wool or rock wool, and is arranged in such a manner to cover the pipe P₃ (transmission pipe) . It is preferred that the insulating member 15 cover the pipe P₃ with as little gap as possible. A gap therebetween may lead to the absence of heating by the heating means, or may cause generation of condensed water due to insufficient heating.

On the other hand, the stream trace may be wound on the pipe P₃ with or without a gap as long as the steam trace can heat the pipe P₃ to a prescribed temperature. As a heat source of the steam trace, heated steam of other system in a chemical plant may also be used.

It is noted here that, although the steam trace is used as the heating means in this embodiment, other heating means (e.g., a heat transfer heater) may be used as well.

Further, the pipe P₃ (transmission pipe) is arranged downward from a permeated water outlet of the separation membrane module 10 toward the condenser 12. By this configuration, even when condensed water is generated in the pipe P₃ (transmission pipe), backflow of the condensed water into the separation membrane module is avoided. In this embodiment, the pipe P₃ (transmission pipe) is arranged such that a part thereof immediate to the permeated water outlet (outlet of permeated water vapor) of the separation membrane module 10 is arranged along the vertical direction. This configuration is preferred since it enables to more reliably inhibit backflow into the separation membrane module 10 even when condensed water is generated in the pipe P₃ (transmission pipe) due to failure or the like of the temperature-maintaining means.

Thus far, the embodiments of the present invention have been described referring to the drawings; however, they are merely examples of the present invention, and various configurations other than the above-described ones can be adopted as well.

For instance, in one embodiment described above, a case where a dehydration system having a separation membrane module is used in a PV method of treating a liquid-form aqueous organic compound supplied from a distillation column is described; however, the dehydration system of this embodiment may also be used in a VP method. A PV method is generally employed when a liquid (feed liquid) of an aqueous organic compound such as an aqueous organic acid, an aqueous alcohol or an aqueous organic solvent that is recovered from the bottom and/or the middle of the distillation column is supplied to the separation membrane module, while a VP method is generally employed when a gas of an aqueous organic compound such as an aqueous organic acid, an aqueous alcohol or an aqueous organic solvent that is recovered from the top and/or the middle of the distillation column is supplied to the separation membrane module.

In the above-described embodiments, the dehydration system has a single separation membrane module; however, the dehydration system may have plural separation membrane modules arranged in series or in parallel as well. Moreover, in the above-described embodiments, a distillation column is used; however, a raw material organic compound may be directly supplied to the dehydration system having the separation membrane module.

In the above-described embodiments, the pipe P₃ (transmission pipe) is configured such that it includes the temperature-maintaining means and is arranged downward from the permeated water outlet of the separation module toward the condenser; however, the pipe P₃ (transmission pipe) may also be configured to have either one of these configurations. Still, from the standpoint of inhibiting generation of condensed water per se, it is preferred that the pipe P₃ (transmission pipe) have at least the temperature-maintaining means.

The present invention also relates to, as another embodiment, a method of operating a dehydration system for separating water from an aqueous organic compound, wherein the dehydration system includes: a separation membrane module inside of which one or plural tubular membrane elements, each including a tubular porous ceramic support and a zeolite membrane disposed on the support, are arranged and which separates water from the aqueous organic compound supplied thereto using the one or plural tubular membrane elements; a pressure-reducing means for reducing the pressure on a water permeate side of each tubular membrane element; a condenser which is arranged between the separation membrane module and the pressure-reducing means via a pipe and condenses water vapor permeating through the tubular membrane element (s) into water; and a water storage vessel in which water permeating through the condenser is retained, and the method includes controlling the pressure in the pipe connecting the separation membrane module and the condenser to be an absolute pressure of 20 kPa or less when water retained in the water storage vessel is discharged (this method is hereinafter referred to as "the operation method of this embodiment").

The "pipe connecting the separation membrane module and the condenser" may be hereinafter referred to as a "transmission pipe" .

The operation method of this embodiment is characterized by controlling the pressure in the pipe connecting the separation membrane module and the condenser to be an absolute pressure of 20 kPa or less when water retained in the water storage vessel is discharged.

The pressure in the pipe connecting the separation membrane module and the condenser when water is discharged from the water storage vessel has not been previously given great importance; however, since backflow of water and the like are inhibited by controlling the pipe pressure in this manner, the occurrence of damage to the membrane element(s), which is attributed to back-flowed water and causes heat shock and the like, is suppressed.

That is, according to the studies conducted by the present inventor, it was discovered that heat shock occurs when water accumulated in the condenser, the water storage vessel and the pipe connecting them reaches the membrane inner side, and this causes damage to the membrane element(s). Particularly, the membrane element (s) is/are highly likely to be damaged in the case of, for example, removing water from an aqueous organic compound having a high temperature (e.g., about 130°C).

In the operation method of this embodiment, it is preferred that the dehydration system include a pressure control member which is arranged on a pipe connecting the condenser and the water storage vessel and can be opened and closed, and that the pressure in the pipe connecting the separation membrane module and the condenser is controlled by initially closing the pressure control member when water is discharged from the water storage vessel.

It is noted here that, in this embodiment, the phrase "initially closing the pressure control member" means to at least close the pressure control member before performing an operation of cancelling a reduced-pressure state of the water storage vessel.

In cases where water is discharged from the water storage vessel while supplying an aqueous organic compound to the outer surface of the separation membrane and thereby performing separation, if the pressure control member is in an opened state, a gas (usually the atmosphere) introduced into the water storage vessel for cancelling a reduced-pressure state of the water storage vessel is introduced to the inner side of the separation membrane through the pipe.

In association with this, water accumulated in the condenser, the water storage vessel and the pipe connecting them reaches the membrane inner side to cause heat shock, damaging the membrane element(s).

Thus, a vacuum state on the permeate side of the separation membrane module is maintained by closing the pressure control member before introducing a gas into the water storage vessel. As water permeates to the permeate side over time, the pressure of the permeate side is gradually increased; however, by monitoring the pipe between the separation membrane module and the condenser and controlling the pressure control member under such a condition that does not allow the pressure to exceed an absolute pressure of 20 kPa, the pressure between the separation membrane and the condenser as well as between the condenser and the pressure control member can be maintained in a certain range at all times, and damage to the membrane element (s) caused by pressure fluctuation can thereby be suppressed.

After water is discharged from the water storage vessel, it is preferred to control the pressure between the separation membrane module and the condenser by opening the pressure control member in the end at the time of reducing the pressure again in the water storage vessel and the pipe connecting the pressure control member and the water storage vessel. By operating the pressure control member in this manner, damage to the membrane element(s) caused by pressure fluctuation is suppressed.

It is noted here that the phrase "opening the pressure control member in the end" means to at least open the pressure control member after performing an operation of bringing the water storage vessel into a reduced-pressure state.

In the operation method of this embodiment, as the conditions relating to a conventional dehydration equipment such as a distillation column, the aqueous organic compound to be dehydrated and concentrated and the concentration method, the conditions of the above-described embodiments can be applied in the same manner.

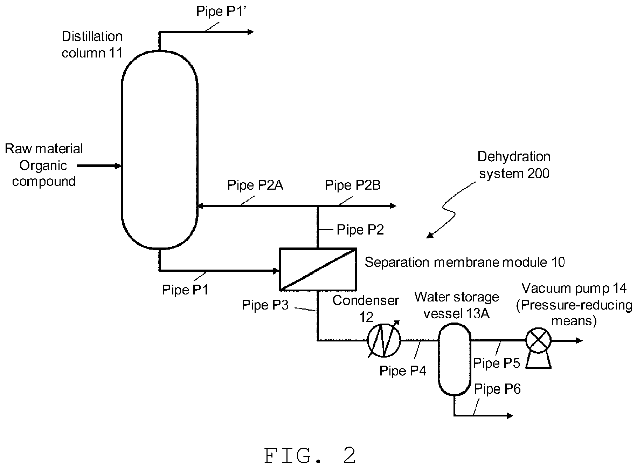

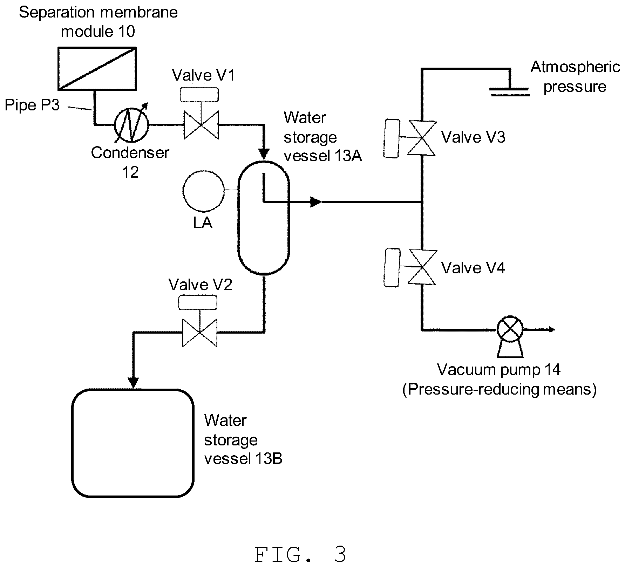

FIG. 2 is a schematic view illustrating a dehydration system of an aqueous organic compound, which is one embodiment of the present invention and used for a PV method where damage to a membrane element is suppressed by controlling the above-described pressure to be not higher than a specific pressure. Further, FIG. 3 is an enlarged schematic view illustrating a section between a separation membrane module and a pressure-reducing means. In FIG. 2, the section between the separation membrane module and the pressure-reducing means is illustrated in a simple manner.

In a dehydration system 200 of this embodiment illustrated in FIG. 2, a raw material organic compound is distilled in a distillation column 11, and a low-boiling-point component is discharged from the top of the column via a pipe P₁', while a high-boiling-point component (liquid component) is supplied from the bottom of the column to a separation membrane module 10 via a pipe P₁. In the embodiment illustrated in FIG. 2, an aqueous organic compound constituting this high-boiling-point component is exemplified as a treatment subject; however, an aqueous organic compound constituting a liquid component obtained after condensation of the low-boiling-point component discharged via the pipe P₁' may be the treatment subject as well.

Inside the separation membrane module 10, one or plural tubular membrane elements (see FIG. 4) each having a tubular porous ceramic support and a zeolite membrane disposed on the support are arranged. Each tubular membrane element has a separation membrane (zeolite membrane) which does not allow an organic compound to permeate therethrough but selectively allows water to permeate therethrough.

In the separation membrane module 10, an aqueous organic compound is brought into contact with the outer surface of each tubular membrane element and the pressure of the inner surface side is reduced by a pressure-reducing means to allow water to permeate from the outer surface to the inner surface of the membrane element, whereby the organic compound is concentrated and water is recovered. Further, in the PV method, since progress of such dehydration of the aqueous organic compound to be treated usually causes a reduction in temperature, a heating means (not illustrated) is arranged in the separation membrane module 10.

In the separation membrane module, the membrane element may be of a single-tube type or a multi-tube type, and it is preferred that usually 1 to 2,000, particularly 50 to 1,000 membrane elements be arranged apart from one another by a distance of 5 mm to 10 mm. In the separation membrane module, the housing size and the number of the membrane elements are changed as appropriate in accordance with the amount of a fluid to be treated. A concrete configuration of the membrane elements is described below.

The aqueous organic compound thus dehydrated and concentrated without permeating through the membrane element(s) is discharged via a pipe P₂ and then circulated back to the distillation column 11 via a pipe P_{2A} when the water content is equal to or higher than a reference value, or recovered as a dehydrated organic compound via a pipe P_{2B} when the water content is equal to or lower than the reference value.

A method of operating the dehydration system will now be described referring to an enlarged schematic view of a section between the separation membrane module and the pressure-reducing means, which is illustrated in FIG. 3.

In the downstream of the separation membrane module 10, a condenser 12, a water storage vessel 13A and a vacuum pump 14 are arranged in series, and water (steam) permeated through the separation membrane(s) of the membrane element(s) is condensed in the condenser 12 and subsequently sent to and temporarily retained in the water storage vessel 13A. Once the amount of the retained water reaches a prescribed level, the retained water is discharged from the bottom of the water storage vessel 13A and sent to a water storage vessel 13B via a pipe. The water storage vessel 13B is larger than the water storage vessel 13A and is thus capable of retaining a greater amount of water.

A reduced pressure on the permeate side that is required as a driving force of water permeating through the membrane(s) is provided by the vacuum pump 14 used as a pressure-reducing means, and the degree of vacuum is controlled by valves V₁ to V₄, which are pressure control members arranged in the middle of the respective pipes.

Specifically, during the operation, the valves V₁ and V₄ are opened (valves V₂ and V₃ are closed) and, once water retained in the water storage vessel 13A reached a prescribed amount, the valve V₁ is closed first. Then, the valve V₄ is closed and the valves V₂ and V₃ are opened to expose the water storage vessel 13A to the atmosphere, whereby water retained in the water storage vessel 13A is transferred to the water storage vessel 13B. It is noted here that, after the valve V₁ is closed, the operations of opening or closing the valves V₂, V₃ and V₄ are performed simultaneously; however, these operations may also be performed with a time lag.

In this embodiment, water retained in the water storage vessel 13A is transferred to the water storage vessel 13B by exposing the water storage vessel 13A to the atmosphere; however, a gas other than the atmosphere may be introduced into the water storage vessel 13A to cancel a reduced-pressure state. Further, although the water storage vessel 13B usually has atmospheric pressure, it may have a reduced pressure as well.

In a conventional operation method, at the time of discharging water from the water storage vessel 13A and recovering a degree of vacuum, the four valves V₁ to V₄ are operated substantially simultaneously without any particular control; however, in the operation method of this embodiment, these valves are operated such that the pressure in the pipe (pipe P₃) connecting the separation membrane module 10 and the condenser 12 is controlled to be an absolute pressure of 20 kPa or less. Specifically, during the operation, the valves V₁ and V₄ are in an opened state while the valves V₂ and V₃ are in a closed state, and the absolute pressure on the permeate side of the separation membrane module is 0.5 to 15 kPa or so, with the pressure in the pipe P₃ that connects the separation membrane module 10 and the condenser 12 also being the same. The valves V₁ and V₄ are closed when water is discharged from the water storage vessel 13A; however, since there is still a difference in water partial pressure between the outside and the inside of each membrane element in the separation membrane module, the pressure on the permeate side gradually increases with time. Therefore, the pipe P₃ is monitored so as to perform the discharge of water from the water storage vessel 13A (operations of the valves V₂ and V₃), the recovery of a degree of vacuum in the water storage vessel 13A (operation of the valve V₄) and the recovery of a degree of vacuum in the pipe P₃ (corresponding to the pressure on the permeate side) (operation of the valve V₁), all under such a condition where the absolute pressure in the pipe P₃ does not exceed 20 kPa.

The time required for the absolute pressure in the pipe P₃ to reach 20 kPa after closing of the valve V₁ is dependent on the degree of vacuum during the operation, the aqueous organic compound to be treated (ant its water content), the separation membrane module (membrane element(s) constituting the module), the inner volume of the pipe P₃ and the like and thus cannot be generalized; however, it is usually 1 to 3 minutes or so. The inner volume of the water storage vessel 13A, the amount of water to be retained until discharge, the output of the vacuum pump 14 and the like are set as appropriate such that the discharge of water from the water storage vessel 13A and the recovery of a degree of vacuum can be performed during the above-describe period.

One example of concrete conditions of the operation method of this embodiment will now be described; however, the conditions of the operation method are not restricted thereto.

For instance, when a module equipped with six zeolite membrane elements each having an inner diameter of 12 mm and a length of 1,200 mm is used as the separation membrane module 10 and the water storage vessel 13A and the pipe P₃ have an inner volume of 20 L and 2 to 3L, respectively, one example of the order and the time intervals relating to opening and closing of the respective valves are as follows:
(1) closing of V₄,
(2) closing of V₄ (15 seconds after closing of V₁),
(3) opening of V₃ (5 seconds after closing of V₄),
(4) opening of V₂ (5 seconds after opening of V₃),
(5) closing of V₂ and V₃ (40 seconds after opening of V₂ (time for liquid discharge from the water storage vessel 13B),
(6) opening of V₄ (5 seconds after closing of V₂ and V₃), and
(7) opening of V₁ (30 seconds after opening of V₄).

As described above as one example of concrete conditions, after water is discharged from the water storage vessel 13A, it is preferred to open the valve V₁ in the end at the time of reducing the pressure in the water storage vessel 13 and the pipe P₃. By opening the valve V₁ after the water storage vessel 13A and the pipe P₃ are brought into a desired reduced-pressure state, since the pressure between the separation membrane module and the condenser as well as between the condenser and the valve V₁ is maintained in a certain range at all times, damage to the membrane elements caused by pressure fluctuation can be suppressed.

Further, another embodiment of the present invention, which is a dehydration method of separating water from an aqueous organic compound, includes, at least: a separation membrane module inside of which one or plural tubular membrane elements, each including a tubular porous ceramic support and a zeolite membrane disposed on the support, are arranged and which separates water from the aqueous organic compound supplied thereto using the one or plural tubular membrane elements; a pressure-reducing means for reducing the pressure on a water permeate side of each tubular membrane element; a condenser which is arranged between the separation membrane module and the pressure-reducing means via a pipe and condenses water vapor permeating through the tubular membrane element(s) into water; and a backflow-inhibiting means for inhibiting backflow of the thus condensed water into the membrane element(s).

In one preferred mode, the backflow-inhibiting means has at least one of the following configurations (1) and (2):
Configuration (1): the backflow-inhibiting means includes a temperature-maintaining means for maintaining the pipe connecting the separation membrane module and the condenser to have a temperature at which water does not condense, and
Configuration (2): the pipe connecting the separation membrane module and the condenser is arranged downward from a permeated water outlet of the separation membrane module toward the condenser.

In another preferred mode, the backflow-inhibiting means includes a water storage vessel in which water permeating through the condenser is retained, and controls the pressure in the pipe connecting the separation membrane module and the condenser to be an absolute pressure of 20 kPa or less when water retained in the water storage vessel is discharged.

The embodiments disclosed herein should be considered in all respects illustrative and not restrictive. In particular, those matters not explicitly stated in the disclosed embodiments, such as operation conditions, working conditions, various parameters, and dimensions, weight, volume and the like of constituents, do not depart from a range that is normally carried out by a person of ordinary skill in the art, and values that can be easily conceived by a person of ordinary skill in the art are adopted.

The membrane element arranged inside the separation membrane module in the dehydration system of the present invention will now be described. It is noted here that the below-described membrane element represents a preferred mode of the membrane element used in the dehydration system of the present invention, and the membrane element is not restricted to the following as long as the object of the present invention is not impaired.

A membrane element 1 used in this embodiment that is illustrated in FIG. 4 has a zeolite membrane on (the outer side of) a tubular porous ceramic support and assumes a tubular shape as a whole. The "tubular shape" is not restricted to a cylindrical shape and may be a rectangular tube shape; however, from the standpoint of improving the sealing property, the membrane element 1 preferably has a cylindrical (tubular) shape.

FIGs. 4(A) and 4(B) illustrate one example of the membrane element 1. FIG. 4(A) is a drawing that schematically illustrates the outer appearance of the membrane element 1, and FIG. 4(B) is a drawing that schematically illustrates a IIB-IIB cross-section of FIG. 4 (A) . As illustrated in FIG. 4, the membrane element 1 has a cylindrical porous ceramic support 1a and a zeolite membrane 1b formed on the outer side (outer wall surface) of the porous ceramic support 1a.

In the dehydration system of the above-described embodiment, the membrane element 1 illustrated in FIG. 4 which has the zeolite membrane only on the outer wall of the porous ceramic support is used; however, it is also possible to use a membrane element which has a zeolite membrane only on the inner wall or on both the inner wall and the outer wall of a porous ceramic support.

The porous ceramic support 1a functions as a support that supports the zeolite membrane 1b. The material constituting the porous ceramic support 1a is not particularly restricted and may be any chemically stable porous inorganic substance as long as zeolite can be crystallized on its surface or the like in a membrane form. Specific examples of such a material include sintered ceramics, such as silica, *α*-alumina, *γ*-alumina, mullite, zirconia, titania, yttria, silicon nitride, and silicon carbide. Thereamong, aluminas, such as *α*-alumina and *γ*-alumina, and mullite are preferred, and aluminas are particularly preferred.

The porous ceramic support 1a itself is not required to have a molecular sieving capability. In the porous ceramic support 1a, fine pores (holes, voids) continuous from the outer side toward the inner side are formed. As the porous ceramic support 1a having such pores, any known porous ceramic support can be used.

The porous ceramic support 1a has a porosity of usually 20% or higher, preferably 25% or higher, more preferably 30% or higher, but usually 80% or lower, preferably 60% or lower, more preferably 50% or lower, and the average pore size of the porous ceramic support 1a is usually 0.01 um or larger, preferably 0.05 um or larger, more preferably 0.1 um or larger, with the upper limit thereof being usually 20 um or smaller, preferably 10 um or smaller, more preferably 5 µm or smaller. The porous ceramic support 1a having such pores not only has a sufficient strength and can appropriately support the zeolite membrane 1b, but also can allow molecules passed through the zeolite membrane 1b to permeate therethrough at a sufficient rate or allow molecules to reach the zeolite membrane 1b at a sufficient rate. Moreover, the porous ceramic support 1a is not easily broken even when a pressure is applied thereto from a sealing member by caulking. The porosity and the pore size of the porous ceramic support 1a can be easily determined by mercury porosimetry, SEM observation of a cross-section, or the like. The same also applies to the average pore size; however, the average pore size can also be calculated from the volume and the mass using the true specific gravity.

The thickness of the porous ceramic support 1a is not particularly restricted as long as the porous ceramic support 1a has a prescribed strength. The thickness varies depending on the material, the porosity and the like; however, the thickness is, for example, preferably not less than 0.5 mm, more preferably not less than 0.8 mm, still more preferably not less than 1.3 mm.

The inner diameter of the porous ceramic support 1a is also not particularly restricted as long as the porous ceramic support 1a has a prescribed strength. The inner diameter varies depending on the material, the porosity and the like; however, the ratio of the inner diameter with respect to the thickness of the porous ceramic support 1a (inner diameter (mm)/thickness (mm)) is, for example, preferably not higher than 20, more preferably not higher than 17, still more preferably not higher than 13, particularly preferably not higher than 9.

The length (length in the axial direction) of the porous ceramic support 1a is also not particularly restricted.

The zeolite membrane 1b is a thin layer formed on the outer side (outer surface) of the porous ceramic support 1a. The mode of the zeolite membrane 1b is not particularly restricted as long as it can appropriately exhibit molecular sieving capability.

The zeolite membrane 1b is preferably composed of an aluminosilicate; however, as long as the membrane performance is not greatly impaired, a metal element such as Ga, Fe, B, Ti, Zr, Sn or Zn may be used in place of Al, or the zeolite membrane 1b may also contain an element such as Ga, Fe, B, Ti, Zr, Sn, Zn or P along with Al.

Further, the skeleton of crystal zeolite constituting the pores of the zeolite membrane is preferably an 8 or less-membered oxygen ring, more preferably a 6 to 8-membered oxygen ring.

Examples of the structure of zeolite include AEI, AFG, ANA, CHA, DDR, EAB, ERI, ESV, FAR, FRA, GIS, ITE, KFI, LEV, LIO, LOS, LTA, LTN, MAR, PAU, RHO, RTH, SOD, STI, TOL, and UFI. Thereamong, it is preferred to use a membrane constituted by AEI, CHA, DDR, ERI, KFI, LEV, PAU, RHO, RTH, SOD, LTA or UFI-type zeolite, and it is more preferred to use a membrane constituted by CHA, DDR, RHO or SOD-type zeolite. It is noted here that, in a zeolite having an n-membered oxygen ring, the value of n represents the number of oxygen atoms in a pore having the largest number of oxygen atoms among the pores constituted by a zeolite skeleton and an element T (non-oxygen element constituting the skeleton).

In the synthesis of a zeolite membrane as the zeolite membrane 1b, an organic template (structure-directing agent) may be used as required, and the template is usually not particularly restricted as long as it can yield a desired zeolite structure. It is not necessary to use a template when the zeolite membrane 1b can be synthesized without a template.

The thickness of the zeolite membrane 1b is not particularly restricted; however, it is usually 0.01 µm to 30 um, preferably 0.01 µm to 10 um. The thinner the zeolite membrane 1b, the more preferred it is, as long as the membrane performance is not greatly impaired.

Examples of a method of forming the zeolite membrane 1b on the surface of the porous ceramic support 1a include a method of crystallizing zeolite in a membrane form on the surface of the porous ceramic support 1a (see, for example, WO 2013/125660) .

In FIG. 4, a mode in which the zeolite membrane 1b is formed on the outer wall of the porous ceramic support 1a is illustrated; however, the present invention is not restricted to this mode. A mode in which the zeolite membrane 1b is formed on the inner wall of the porous ceramic support 1a, or a mode in which the zeolite membrane 1b is formed on both the outer wall and the inner wall of the porous ceramic support 1a, may be adopted as well.

### INDUSTRIAL APPLICABILITY

In the aqueous organic solvent dehydration system according to the present invention, the occurrence of damage to a separation membrane element of the separation membrane module is inhibited; therefore, the dehydration system is suitable for applications where steady operation is required over a long period (e.g., chemical plants).

### DESCRIPTION OF SYMBOLS

1: separation membrane element
1a: porous ceramic support
1b: zeolite membrane
10: separation membrane module
11: distillation column
12: condenser
13: water storage tank
13A, 13B: water storage vessel
14: vacuum pump
15: insulating member
100, 200: dehydration system
P₁, P₁', P₂, P_{2A}, P_{2B}: pipe (non-permeate side)
P₃: pipe (transmission pipe)
P₄, P₅, P₆: pipe
V₁, V₂, V₃, V₄: valve (pressure control member)

## Claims

1. A dehydration system (100, 200) for separating water from an aqueous organic compound, said dehydration system (100, 200) comprising:
a separation membrane module (10) inside of which one or plural tubular membrane elements (1), each comprising a tubular porous ceramic support (1a) and a zeolite membrane (1b) disposed on said support (1a), are arranged and which separates water from said aqueous organic compound supplied thereto using said one or plural tubular membrane element(s) (1);
a pressure-reducing means for reducing the pressure on a water permeate side of each tubular membrane element (1); and
a condenser (12) which is arranged between said separation membrane module (10) and said pressure-reducing means via a transmission pipe (P₃) and condenses water vapor permeating through said tubular membrane element(s) (1) into water,
wherein said dehydration system (100, 200) is configured to allow water to permeate from an outer surface to an inner surface of the membrane element(s) (1) by bringing the aqueous organic compound into contact with the outer surface of each tubular membrane element (1) and by reducing the pressure on the inner surface side by means of said pressure-reducing means, and
**characterised in that**
said dehydration system has at least one of the following configurations (1) and (2):
Configuration (1): said dehydration system (100, 200) comprises a temperature-maintaining means for maintaining said transmission pipe (P₃) connecting said separation membrane module (10) and said condenser (12) to have a temperature at which water does not condense, and
Configuration (2): said transmission pipe (P₃) connecting said separation membrane module (10) and said condenser (12) is arranged downward from a permeated water outlet of said separation membrane module (10) toward said condenser (12) meaning any state where the condenser (12) is positioned lower than the permeated water outlet of the separation membrane module (10) and the transmission pipe (P₃) is connected such that it is not positioned higher than the permeated water outlet of the separation membrane module (10),
wherein said configurations serve to inhibit backflow of condensed water generated in the transmission pipe (P₃) into the separation membrane module (10).

2. The dehydration system (100, 200) according to claim 1, wherein said dehydration system (100, 200) has at least said configuration (1) and comprises, as said temperature-maintaining means, an insulating member (15) which covers said transmission pipe (P₃) connecting said separation membrane module (10) and said condenser (12).

3. The dehydration system (100, 200) according to claim 1 or 2, wherein said dehydration system (100, 200) has at least said configuration (1) and comprises, as said temperature-maintaining means, a heating means for heating said transmission pipe (P₃) connecting said separation membrane module(10) and said condenser (12) .

4. The dehydration system (100, 200) according to claim 3, wherein said heating means is a steam trace or an electrical trace.

5. The dehydration system (100, 200) according to any one of claims 1 to 4, having both of said configurations (1) and (2).

6. An aqueous organic compound dehydration method of separating water from an aqueous organic compound, said method comprising the steps of:
separating water from said aqueous organic compound using one or plural tubular membrane elements (1) being arranged inside a separation membrane module (10), and wherein each tubular membrane element (1) comprises a tubular porous ceramic support (1a) and a zeolite membrane (1b) disposed on said support (1a),
wherein the aqueous organic compound is supplied to the separation membrane module (10) and brought into contact with the outer surface of each tubular membrane element (1),
and wherein the pressure on a water permeate and inner surface side of each tubular membrane element (1) is reduced by a pressure-reducing means to allow water to permeate from an outer surface to the inner surface of the membrane element(s) (1);
condensing water vapor permeating through said tubular membrane element(s) (1) into water in a condenser (12) which is arranged between said separation membrane module (10) and said pressure-reducing means via a transmission pipe (P₃); and
**characterised by** inhibiting backflow of the thus condensed water into said membrane element(s) by a backflow-inhibiting means, wherein said backflow-inhibiting means has at least one of the following configurations (1) and (2):
Configuration (1): said backflow-inhibiting means comprises a temperature-maintaining means for maintaining said transmission pipe (P₃) connecting said separation membrane module and said condenser (12) to have a temperature at which water does not condense, and
Configuration (2): said pipe connecting said separation membrane module (10) and said condenser (12) is arranged downward from a permeated water outlet of said separation membrane module (10) toward said condenser (12) meaning any state where the condenser (12) is positioned lower than the permeated water outlet of the separation membrane module (10) and the transmission pipe (P₃) is connected such that it is not positioned higher than the permeated water outlet of the separation membrane module (10).

7. The aqueous organic compound dehydration method according to claim 6, wherein
said method comprises retaining water permeated through said condenser in a water storage vessel (13A, 13B), and
controlling the pressure in the pipe connecting said separation membrane module (10) and said condenser (12) to be an absolute pressure of 20 kPa or less by said backflow-inhibiting means when water retained in the water storage vessel (13A, 13B) is discharged.

8. The aqueous organic compound dehydration method according to claim 6, wherein said method comprises maintaining the temperature of said transmission pipe (P₃) connecting said separation membrane module (10) and said condenser (12) to be 20°C or higher.

9. The aqueous organic compound dehydration method according to claim 8, wherein the temperature of said transmission pipe (P₃) is adjusted to be in a range of -20°C to 20°C with respect to a preset temperature of said separation membrane module (10).

10. The aqueous organic compound dehydration method according to claim 7, wherein said dehydration system (100, 200) comprises opening and closing of a pressure control member which is arranged on a pipe connecting said condenser (12) and said water storage vessel (13A, 13B), wherein
the pressure in said pipe connecting said separation membrane module (10) and said condenser (12) is controlled by initially closing said pressure control member when water is discharged from said water storage vessel (13A, 13B).

11. The aqueous organic compound dehydration method (100, 200) according to any of claims 7 or 10, wherein, after water is discharged from said water storage vessel (13A, 13B), said pressure control member arranged on said transmission pipe connecting said condenser and said water storage vessel (13A, 13B) is opened in the end at the time of reducing the pressure in said water storage vessel (13A, 13B) and said pipe connecting said pressure control member and said water storage vessel (13A, 13B).

## Patentansprüche

1. Dehydratisierungssystem (100, 200) zur Abtrennung von Wasser aus einer wässrigen organischen Verbindung, wobei das Dehydratisierungssystem (100, 200) umfasst:
ein Trennmembranmodul (10), in dem ein oder mehrere röhrenförmige Membranelemente (1), die jeweils einen röhrenförmigen porösen Keramikträger (1a) und eine auf dem Träger (1a) angeordnete Zeolithmembran (1b) umfassen, angeordnet sind, und das Wasser von der ihm zugeführten wässrigen organischen Verbindung unter Verwendung des einen oder der mehreren röhrenförmigen Membranelements/Membranelemente (1) trennt;
ein Druckreduziermittel zum Reduzieren des Drucks auf einer Wasserpermeatseite jedes röhrenförmigen Membranelements (1); und
einen Kondensator (12), der zwischen dem Trennmembranmodul (10) und dem Druckreduziermittel über ein Übertragungsrohr (P₃) angeordnet ist und Wasserdampf, der durch das/die röhrenförmige(n) Membranelement(e) (1) dringt, zu Wasser kondensiert,
wobei das Dehydratisierungssystem (100, 200) so konfiguriert ist, dass es Wasser von einer äußeren Oberfläche zu einer inneren Oberfläche des/der Membranelements/Membranelemente (1) durchdringen lässt, indem es die wässrige organische Verbindung in Kontakt mit der äußeren Oberfläche jedes röhrenförmigen Membranelements (1) bringt und indem es den Druck auf der Seite der inneren Oberfläche mittels des Druckreduziermittels reduziert, und
**dadurch gekennzeichnet, dass** das Dehydratisierungssystem mindestens eine der folgenden Konfigurationen (1) und (2) aufweist:
Konfiguration (1): das Dehydratisierungssystem (100, 200) umfasst ein Mittel zur Temperaturerhaltung, um das Übertragungsrohr (P₃), das das Trennmembranmodul (10) und den Kondensator (12) verbindet, auf einer Temperatur zu halten, bei der Wasser nicht kondensiert, und
Konfiguration (2): das Übertragungsrohr (P₃), das das Trennmembranmodul (10) und den Kondensator (12) verbindet, ist von einem Auslass für durchgelassenes Wasser des Trennmembranmoduls (10) nach unten in Richtung des Kondensators (12) angeordnet, was bedeutet, dass der Kondensator (12) in jedem Zustand niedriger als der Auslass für durchgelassenes Wasser des Trennmembranmoduls (10) positioniert ist und das Übertragungsrohr (P₃) so angeschlossen ist, dass es nicht höher als der Auslass für durchgelassenes Wasser des Trennmembranmoduls (10) positioniert ist,
wobei diese Konfigurationen dazu dienen, einen Rückfluss von in dem Übertragungsrohr (P₃) erzeugtem Kondenswasser in das Trennmembranmodul (10) zu verhindern.

2. Dehydratisierungssystem (100, 200) nach Anspruch 1, wobei das Dehydratisierungssystem (100, 200) zumindest die Konfiguration (1) aufweist und als Mittel zur Temperaturerhaltung ein Isolierelement (15) umfasst, das das Übertragungsrohr (P₃), das das Trennmembranmodul (10) und den Kondensator (12) verbindet, abdeckt.

3. Dehydratisierungssystem (100, 200) nach Anspruch 1 oder 2, wobei das Dehydratisierungssystem (100, 200) zumindest die Konfiguration (1) aufweist und als Mittel zur Temperaturerhaltung ein Heizmittel zum Beheizen des Übertragungsrohrs (P₃), das das Trennmembranmodul (10) und den Kondensator (12) verbindet, umfasst.

4. Dehydratisierungssystem (100, 200) nach Anspruch 3, wobei das Heizmittel eine Dampfleitung oder eine elektrische Leitung ist.

5. Dehydratisierungssystem (100, 200) nach einem der Ansprüche 1 bis 4, das beide Konfigurationen (1) und (2) aufweist.

6. Verfahren zur Dehydratisierung einer wässrigen organischen Verbindung zur Abtrennung von Wasser aus einer wässrigen organischen Verbindung, wobei das Verfahren die folgenden Schritte umfasst:
Abtrennen von Wasser aus der wässrigen organischen Verbindung unter Verwendung eines oder mehrerer röhrenförmiger Membranelemente (1), die innerhalb eines Trennmembranmoduls (10) angeordnet sind, und wobei jedes röhrenförmige Membranelement (1) einen röhrenförmigen porösen Keramikträger (1a) und eine auf dem Träger (1a) angeordnete Zeolithmembran (1b) umfasst,
wobei die wässrige organische Verbindung dem Trennmembranmodul (10) zugeführt und mit der äußeren Oberfläche jedes röhrenförmigen Membranelements (1) in Kontakt gebracht wird,
und wobei der Druck auf einer Wasserpermeat- und inneren Oberflächenseite jedes röhrenförmigen Membranelements (1) durch ein Druckreduziermittel reduziert wird, um Wasser von einer äußeren Oberfläche zur inneren Oberfläche des/der Membranelements/Membranelemente (1) durchdringen zu lassen;
Kondensieren von Wasserdampf, der durch das/die röhrenförmige(n) Membranelement(e) (1) dringt, zu Wasser in einem Kondensator (12), der zwischen dem Trennmembranmodul (10) und dem Druckreduziermittel über ein Übertragungsrohr (P₃) angeordnet ist; und
**gekennzeichnet durch** Verhindern des Rückflusses des so kondensierten Wassers in das/die Membranelement(e) durch ein Rückflussverhinderungsmittel, wobei das Rückflussverhinderungsmittel mindestens eine der folgenden Konfigurationen (1) und (2) aufweist:
Konfiguration (1): das Rückflussverhinderungsmittel umfasst ein Mittel zur Temperaturerhaltung, um das Übertragungsrohr (P₃), das das Trennmembranmodul und den Kondensator (12) verbindet, auf einer Temperatur zu halten, bei der Wasser nicht kondensiert, und
Konfiguration (2): das Rohr, das das Trennmembranmodul (10) und den Kondensator (12) verbindet, ist von einem Auslass für durchgelassenes Wasser des Trennmembranmoduls (10) nach unten in Richtung des Kondensators (12) angeordnet, was bedeutet, dass der Kondensator (12) in jedem Zustand niedriger als der Auslass für durchgelassenes Wasser des Trennmembranmoduls (10) positioniert ist und das Übertragungsrohr (P₃) so angeschlossen ist, dass es nicht höher als der Auslass für durchgelassenes Wasser des Trennmembranmoduls (10) positioniert ist.

7. Verfahren zur Dehydratisierung einer wässrigen organischen Verbindung nach Anspruch 6, wobei
das Verfahren das Zurückhalten des durch den Kondensator durchgelassenen Wassers in einem Wasserspeicherbehälter (13A, 13B) umfasst, und
das Steuern des Drucks in dem Rohr, das das Trennmembranmodul (10) und den Kondensator (12) verbindet, durch das Rückflussverhinderungsmittel auf einen absoluten Druck von 20 kPa oder weniger, wenn das in dem Wasserspeicherbehälter (13A, 13B) zurückgehaltene Wasser abgelassen wird.

8. Verfahren zur Dehydratisierung einer wässrigen organischen Verbindung nach Anspruch 6, wobei das Verfahren das Halten der Temperatur des Übertragungsrohrs (P₃), das das Trennmembranmodul (10) und den Kondensator (12) verbindet, auf 20°C oder höher umfasst.

9. Verfahren zur Dehydratisierung einer wässrigen organischen Verbindung nach Anspruch 8, wobei die Temperatur des Übertragungsrohrs (P₃) so eingestellt wird, dass sie in einem Bereich von -20°C bis 20°C in Bezug auf eine voreingestellte Temperatur des Trennmembranmoduls (10) liegt.

10. Verfahren zur Dehydratisierung einer wässrigen organischen Verbindung nach Anspruch 7, wobei das Dehydratisierungssystem (100, 200) das Öffnen und Schließen eines Drucksteuerungselements umfasst, das an einem Rohr angeordnet ist, das den Kondensator (12) und den Wasserspeicherbehälter (13A, 13B) verbindet, wobei der Druck in dem Rohr, das das Trennmembranmodul (10) und den Kondensator (12) verbindet, durch anfängliches Schließen des Drucksteuerungselements gesteuert wird, wenn Wasser aus dem Wasserspeicherbehälter (13A, 13B) abgelassen wird.

11. Verfahren zur Dehydratisierung einer wässrigen organischen Verbindung (100, 200) nach einem der Ansprüche 7 oder 10, wobei nach dem Ablassen von Wasser aus dem Wasserspeicherbehälter (13A, 13B) das Drucksteuerungselement, das an dem Übertragungsrohr, das den Kondensator und den Wasserspeicherbehälter (13A, 13B) verbindet, angeordnet ist, am Ende zum Zeitpunkt der Reduzierung des Drucks in dem Wasserspeicherbehälter (13A, 13B) und dem Rohr, das das Drucksteuerungselement und den Wasserspeicherbehälter (13A, 13B) verbindet, geöffnet wird.

## Revendications

1. Système de déshydratation (100, 200) pour séparer l'eau d'un composé organique aqueux, le système de déshydratation (100, 200) comportant :
un module membranaire de séparation (10) à l'intérieur duquel un élément ou une pluralité d'éléments membranaires tubulaires (1), chacun comportant un support céramique poreux tubulaire (1a) et une membrane zéolitique (1b) disposée sur ledit support (1a), sont agencés et qui sépare l'eau dudit composé organique aqueux fourni à celui-ci en utilisant ledit élément ou ladite pluralité d'éléments membranaires tubulaires (1) ;
des moyens réducteurs de pression pour réduire la pression sur un côté de perméat d'eau de chaque élément membranaire tubulaire (1) ; et
un condenseur (12) qui est agencé entre ledit module membranaire de séparation (10) et lesdits moyens réducteurs de pression via un tuyau de transmission (P₃) et condense de la vapeur d'eau s'infiltrant à travers le(s)dit(s) élément(s) membranaire(s) tubulaire(s) (1) dans l'eau,
dans lequel ledit système de déshydratation (100, 200) est configuré pour permettre à l'eau de s'infiltrer depuis une surface extérieure vers une surface intérieure de(s) l'élément(s) membranaire(s) (1) en mettant le composé organique aqueux en contact avec la surface extérieure de chaque élément membranaire tubulaire (1) et en réduisant la pression sur le côté de surface intérieure au moyen desdits moyens réducteurs de pression, et
**caractérisé en ce que** ledit système de déshydratation a au moins une des configurations (1) et (2) suivantes :
Configuration (1) : ledit système de déshydratation (100, 200) comporte des moyens de maintien en température pour maintenir ledit tuyau de transmission (P₃) reliant ledit module membranaire de séparation (10) et ledit condensateur (12) pour avoir une température à laquelle l'eau ne se condense pas, et
Configuration (2) : ledit tuyau de transmission (P₃) reliant ledit module membranaire de séparation (10) et ledit condenseur (12) est agencé vers le bas par rapport à une sortie d'eau infiltrée dudit module membranaire de séparation (10) vers ledit condenseur (12), c'est-à-dire tout état où le condenseur (12) est positionné plus bas que la sortie d'eau infiltrée du module membranaire de séparation (10) et le tuyau de transmission (P₃) est raccordé de telle sorte qu'il n'est pas positionné plus bas que la sortie d'eau infiltrée du module membranaire de séparation (10),
dans lequel lesdites configurations servent à empêcher un reflux d'eau condensée générée dans le tuyau de transmission (P₃) dans le module membranaire de séparation (10).

2. Système de déshydratation (100, 200) selon la revendication 1, dans lequel ledit système de déshydratation (100, 200) a au moins ladite configuration (1) et comporte, en tant que dits moyens de maintien en température, un élément isolant (15) qui recouvre ledit tuyau de transmission (P₃) reliant ledit module membranaire de séparation (10) et ledit condenseur (12).

3. Système de déshydratation (100, 200) selon la revendication 1 ou 2, dans lequel ledit système de déshydratation (100, 200) a au moins ladite configuration (1) et comporte, en tant que dits moyens de maintien en température, des moyens chauffants pour chauffer ledit tuyau de transmission (P₃) reliant ledit module membranaire de séparation (10) et ledit condenseur (12).

4. Système de déshydratation (100, 200) selon la revendication 3, dans lequel lesdits moyens chauffants sont un conduit à vapeur ou un conduit électrique.

5. Système de déshydratation (100, 200) selon l'une quelconque des revendications 1 à 4, ayant les deux dites configurations (1) et (2).

6. Procédé de déshydratation de composé organique aqueux consistant à séparer l'eau d'un composé organique aqueux, ledit procédé comportant les étapes consistant à :
séparer l'eau dudit composé organique aqueux en utilisant un élément ou une pluralité d'éléments membranaires tubulaires (1) étant agencés à l'intérieur d'un module membranaire de séparation (10), et dans lequel chaque élément membranaire tubulaire (1) comporte un support céramique poreux tubulaire (1a) et une membrane zéolitique (1b) disposée sur le support (1a),
dans lequel le composé organique aqueux est fourni au module membranaire de séparation (10) et mis en contact avec la surface extérieure de chaque élément membranaire tubulaire (1),
et dans lequel la pression sur un perméat d'eau et un côté de surface intérieure de chaque élément membranaire tubulaire (1) est réduite par des moyens réducteurs de pression pour permettre à l'eau de s'infiltrer depuis une surface extérieure vers la surface intérieure de(s) l'élément(s) membranaire(s) (1) ;
condenser de la vapeur d'eau s'infiltrant à travers le(s)dit(s) élément(s) membranaire(s) tubulaire(s) (1) dans l'eau dans un condenseur (12) qui est agencé entre ledit module membranaire de séparation (10) et lesdits moyens réducteurs de pression via un tuyau de transmission (P₃) ; et
**caractérisé par** l'inhibition d'un reflux de l'eau ainsi condensée dans le(s)dit(s) élément(s) membranaire(s) par des moyens inhibiteurs de reflux, dans lequel lesdits moyens inhibiteurs de reflux ont au moins une des configurations (1) et (2) suivantes :
Configuration (1) : lesdits moyens inhibiteurs de reflux comportent des moyens de maintien en température pour maintenir ledit tuyau de transmission (P₃) reliant ledit module membranaire de séparation et ledit condenseur (12) pour avoir une température à laquelle l'eau ne se condense pas, et
Configuration (2) : ledit tuyau reliant ledit module membranaire de séparation (10) et ledit condenseur (12) est agencé vers le bas par rapport à une sortie d'eau infiltrée dudit module membranaire de séparation (10) vers ledit condenseur (12), c'est-à-dire tout état où le condenseur (12) est positionné plus bas que la sortie d'eau infiltrée du module membranaire de séparation (10) et le tuyau de transmission (P₃) est raccordé de telle sorte qu'il n'est pas positionné plus haut que la sortie d'eau infiltrée du module membranaire de séparation (10).

7. Procédé de déshydratation de composé organique aqueux selon la revendication 6, dans lequel
ledit procédé comporte de retenir l'eau infiltrée à travers ledit condenseur dans un récipient de stockage d'eau (13A, 13B), et
commander la pression dans le tuyau reliant ledit module membranaire de séparation (10) et ledit condenseur (12) pour qu'elle soit égale à une pression absolue de 20 kPa ou moins par lesdits moyens inhibiteurs de reflux lorsque l'eau retenue dans le récipient de stockage d'eau (13A, 13b) est évacuée.

8. Procédé de déshydratation de composé organique aqueux selon la revendication 6, dans lequel ledit procédé comporte de maintenir la température dudit tuyau de transmission (P₃) reliant ledit module membranaire de séparation (10) et ledit condenseur (12) pour qu'elle soit de 20 °C ou plus élevée.

9. Procédé de déshydratation de composé organique aqueux selon la revendication 8, dans lequel la température dudit tuyau de transmission (P₃) est réglée pour être dans une plage de - 20 °C à 20 °C par rapport à une température préréglée dudit module membranaire de séparation (10).

10. Procédé de déshydratation de composé organique aqueux selon la revendication 7, dans lequel ledit système de déshydratation (100, 200) comporte d'ouvrir et de fermer un organe de commande de pression qui est agencé sur un tuyau reliant ledit condenseur (12) et ledit récipient de stockage d'eau (13A, 13B), dans lequel
la pression dans ledit tuyau reliant ledit module membranaire de séparation (10) et ledit condenseur (12) est commandée en fermant initialement ledit organe de commande de pression lorsque l'eau est évacuée dudit récipient de stockage d'eau (13A, 13B).

11. Procédé de déshydratation de composé organique aqueux (100, 200) selon l'une quelconque des revendications 7 ou 10, dans lequel, après que l'eau est évacuée dudit récipient de stockage d'eau (13A, 13B), ledit organe de commande de pression agencé sur ledit tuyau de transmission reliant ledit condenseur et ledit récipient de stockage d'eau (13A, 13B) est ouvert à la fin, au moment de la réduction de pression dans ledit récipient de stockage d'eau (13A, 13B) et dans ledit tuyau reliant ledit organe de commande de pression et ledit récipient de stockage d'eau (13A, 13B).
